# NOUVEAU FASCICULE DE BREVET EUROPEEN

(11) **EP 1 170 101 B2**
(45) Date de publication et mention de la décision concernant l'opposition: **23.10.2013**
(45) Mention de la délivrance du brevet: 06.04.2005
(21) Numéro de dépôt: 01401072.2
(22) Date de dépôt: 26.04.2001
(51) Int. Cl.: B27H 3/04, B27H 5/00

(54) **Barrique de bois, son procédé de fabrication et dispositif pour sa mise en oeuvre**
Holzfass, Verfahren zu seiner Herstellung sowie Vorrichtung zur Durchführung eines solchen Verfahrens
Wooden cask, its method of manufacture and device therefore

(30) Priorité: 09.06.2000 FR 0007395
(43) Date de publication de la demande: 09.01.2002
(73) Titulaire: Groupe Vicard, 16100 Cognac (FR)
(72) Inventeur: Vicard, Jean-Charles, 16100 Cognac (FR)
(74) Mandataire: Thibaud, Jean-Baptiste

(56) Documents cités:
- DE-C- 50 897
- DE-C- 116 080
- DE-C- 535 873
- GB-A- 384 479
- US-A- 2 736 353
- US-A- 4 093 111

## Description

La présente invention concerne une barrique de bois notamment pour la production de vin et d'eaux-de-vie, un procédé de fabrication d'un fond pour une telle barrique, et un dispositif pour la mise en oeuvre d'un tel procédé.

Une barrique de bois et un procédé de fabrication d'un fond sont déjà connus par exemple de GB-A-384 479. Un dispositif pour la fabrication d'un fond de barrique de bois est déjà connu par exemple de DE-A-50 897.

De longue tradition, l'industrie vinicole a utilisé des barriques en bois, et particulièrement en bois de chêne, pour la production et le transport du vin. De telles barriques ne sont plus utilisées pour le transport, mais remplissent toujours une fonction importante pour l'élevage des vins et alcools, en raison des propriétés physico-chimiques particulières du bois qui contribuent au goût du produit final. Le chêne étant une espèce à pousse lente, le coût du bois de chêne est élevé. De plus, de telles barriques doivent être remplacées régulièrement, typiquement après 4 à 6 ans d'usage, en raison de l'altération de leur surface intérieure au contact du vin, et des problèmes aussi bien gustatifs que microbiens que peut entraîner cette altération.

Une barrique comporte typiquement un corps en forme de cylindre bombé fermé à ses deux extrémités par deux fonds de barrique, également en bois de chêne. Un tel fond doit satisfaire essentiellement deux critères, l'étanchéité et l'aptitude à résister à une pression de deux bars sur sa face intérieure.

Traditionnellement, le procédé d'élaboration des fonds de barrique utilisé par les tonneliers est le suivant :
- des lattes de chêne, appelées pièces de fond, sont régularisées par usinage de leurs quatre faces (deux faces utiles, et deux faces latérales d'assemblage) ;
- elles sont ensuite triées, en fonction de leur largeur et de leur longueur, et placées les unes à côté des autres de façon à ce qu'un fond, en forme de disque, puisse y être taillé ;
- chacune des lattes de chêne est percée de deux à trois trous sur ses deux faces latérales d'assemblage, dénommées les joints ;
- des goujons en acacia sont placés dans chacun des trous d'une des faces latérales ;
- un demi-brin de jonc est disposé à plat sur chaque joint, ce qui assurera l'étanchéité entre deux pièces de fonds assemblées ;
- les lattes de chêne sont assemblées par leurs faces latérales, chaque goujon étant engagé dans deux trous en vis à vis de deux lattes pour les maintenir en emprisonnant entre elles le jonc ;
- les pièces assemblées sont ensuite taillées pour former le fond de barrique.

Afin de réduire le nombre d'étapes nécessaires à la fabrication d'un fond de barrique, et donc le coût de fabrication de la barrique, il peut être intéressant de supprimer l'emploi du jonc d'étanchéité et des goujons d'acacia. Il est à noter qu'il n'est cependant pas souhaitable d'employer une colle ou tout autre produit inapte au contact alimentaire dans un procédé de fabrication de fond de barrique. D'autre part, une parfaite étanchéité, ainsi qu'une bonne résistance à la pression sont nécessaires.

Le but de la présente invention est de fournir une telle barrique de bois, dont le fond est moins cher à produire, du fait de l'absence de goujons d'acacia et de jonc d'étanchéité dans sa fabrication. Un autre but est d'accroître la solidité et/ou l'étanchéité par rapport à un fond obtenu par le procédé traditionnel décrit ci-dessus.

Pour cela, l'invention a pour objet une barrique de bois notamment pour la production de vin et d'eaux-de-vie, comportant un corps fermé par deux fonds, chaque fond de barrique comportant un ensemble de lattes sensiblement droites de section transverse sensiblement rectangulaire assemblées parallèlement les unes aux autres par des faces latérales opposées, caractérisée par le fait que les deux faces latérales adjacentes de deux desdites lattes assemblées sont en contact sensiblement étanche, lesdites deux faces latérales présentant dans un plan perpendiculaire à la direction longitudinale desdites lattes deux profils longitudinaux sensiblement complémentaires apte à être emboîtés à force l'un dans l'autre dans une direction perpendiculaire à ladite direction longitudinale, un premier desdits profils comportant une première partie inclinée par rapport à la direction d'épaisseur desdites lattes et une première partie femelle s'étendant vers l'intérieur de l'épaisseur de la latte dans sa direction transversale, et le second desdits profils comportant une seconde partie inclinée par rapport à la direction d'épaisseur de la latte sensiblement parallèlement à ladite première partie inclinée et une seconde partie mâle sensiblement complémentaire de ladite première partie femelle.

Avantageusement, chaque partie femelle forme une rainure rectangulaire dont le fond est sensiblement parallèle à ladite direction d'épaisseur.

De préférence, ledit premier profil comporte une première partie mâle s'étendant vers l'extérieur de la latte dans sa direction transversale, et le second profil comporte une seconde partie femelle sensiblement complémentaire.

Avantageusement, ledit premier profil présente successivement à partir d'une de ses extrémités ladite première partie inclinée, ladite première partie mâle et ladite première partie femelle.

Selon une caractéristique de l'invention, ledit premier profil comporte une troisième partie inclinée s'étendant à partir de ladite première partie mâle, ladite troisième partie inclinée étant inclinée par rapport à la direction d'épaisseur de la latte et se terminant à l'autre extrémité dudit premier profil, et le second profil comporte une quatrième partie inclinée sensiblement complémentaire de ladite troisième partie inclinée.

Avantageusement, lesdites première et troisième parties inclinées dudit premier profil sont sensiblement parallèles entre elles.

De préférence dans ce cas, ledit premier profil possède un axe longitudinal de symétrie situé à mi-longueur du tronçon de profil reliant le fond de ladite première partie femelle au sommet de ladite première partie mâle.

Avantageusement, chaque partie inclinée fait un angle de l'ordre de 30 degrés par rapport à ladite direction d'épaisseur.

La présente invention fournit également un procédé de fabrication d'un fond de barrique, caractérisé par le fait qu'il comporte :
(a) une étape d'usinage de chacune d'une pluralité de lattes, selon deux faces latérales opposées parallèles à la direction longitudinale de ladite latte, pour usiner suivant respectivement deux profils sensiblement complémentaires lesdites deux faces opposées de chacune desdites lattes, de manière invariante sur la longueur de ladite latte, un premier desdits profils comportant une première partie inclinée par rapport à la direction d'épaisseur de ladite latte et une première partie femelle s'étendant vers l'intérieur de l'épaisseur de la latte dans sa direction transversale et le second desdits profils comportant une seconde partie inclinée par rapport à la direction d'épaisseur de la latte sensiblement parallèlement à ladite première partie inclinée et une seconde partie mâle sensiblement complémentaire de ladite première partie femelle ;
(b) une étape de sélection d'un lot de lattes parmi ladite pluralité, ledit lot étant sélectionné de façon que la surface utile de la réunion des lattes dudit lot, lorsqu'elles seront juxtaposées parallèlement les unes aux autres avec lesdites faces latérales opposées emboîtées, est apte à contenir un disque de diamètre supérieur ou égal à celui dudit fond de barrique ;
(c) une étape d'emboîtage à force dudit lot de lattes par lesdites faces opposées, pour provoquer l'emboîtement des paires de faces latérales adjacentes des lattes dudit lot, chaque paire comportant deux faces latérales usinées suivant respectivement lesdits deux profils sensiblement complémentaires, le contact entre lesdites faces latérales étant, à l'issue de ladite étape d'emboîtement, sensiblement étanche et rigidement maintenu par l'autoserrage desdits deux profils sensiblement complémentaires ;
(d) une étape de découpe dudit fond de barrique dans ledit lot de lattes emboîtées.

Avantageusement, ladite étape d'usinage permet l'usinage simultané desdites deux faces latérales opposées de ladite latte à l'aide d'au moins deux outils de coupe distincts ou identiques.

De préférence, ladite étape d'emboîtage comprend successivement la disposition dudit lot de lattes à assembler par leurs surfaces utiles sur une surface de support, le positionnement d'un organe de maintien pour exercer une pression sur la face utile libre de toutes les lattes dudit lot en direction de ladite surface de support, et l'activation d'au moins un organe de pressage mobile sensiblement perpendiculairement auxdites faces latérales, entre ladite surface de support et ledit organe de maintien.

Un autre objet de la présente invention est un dispositif pour la mise en oeuvre du procédé décrit ci-dessus, caractérisé par le fait qu'il comprend une presse pour effectuer ladite étape d'emboîtage, ladite presse comportant ladite surface de support pour supporter les pièces à presser, ledit organe de maintien qui comprend une surface de maintien sensiblement plane à une de ses extrémités et est apte à exercer une pression de ladite surface de maintien vers ladite surface de support, et ledit au moins un organe de pressage situé près d'une extrémité de ladite surface de support, chaque organe de pressage comportant une face d'appui et étant apte à exercer une force pour déplacer ladite face d'appui dans une direction parallèle à ladite surface de support, ledit organe de maintien étant déplaçable entre une position de manutention dans laquelle ladite surface de maintien est décalée par rapport à ladite surface de support et une position de maintien dans laquelle ladite surface de maintien recouvre au moins une partie centrale de ladite surface de support.

Avantageusement, ladite presse comporte deux organes de pressage dont les faces d'appui sont agencées face à face de part et d'autre de ladite partie centrale de la surface de support.

De préférence, ledit organe de maintien comporte un bras mobile en rotation autour d'un axe situé à une extrémité de ladite surface de support, une extrémité libre dudit bras portant ladite surface de maintien.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence au dessin annexé. Sur ce dessin :
- la figure 1 est une vue de dessus d'un ensemble de lattes à assembler ;
- la figure 2 est une vue de dessus du même ensemble de lattes qu'à la figure 1, après assemblage ;
- la figure 3 est une vue de dessus du fond de barrique selon l'invention découpé dans l'ensemble de lattes de la figure 2 ;
- la figure 4 est une vue de côté selon la flèche IV de la figure 2 ;
- la figure 5 est un détail selon le cadre V de la figure 4 ; - la figure 6 est une vue en coupe partielle d'un dispositif tournant pour usiner la face latérale d'une latte ;
- la figure 7 est une vue en élévation et de face d'une presse selon l'invention ;
- la figure 8 est une vue de dessus de la presse de la figure 7, dans différentes positions de fonctionnement ;
- la figure 9 est un schéma de fonctionnement du système de commande d'une presse selon l'invention.

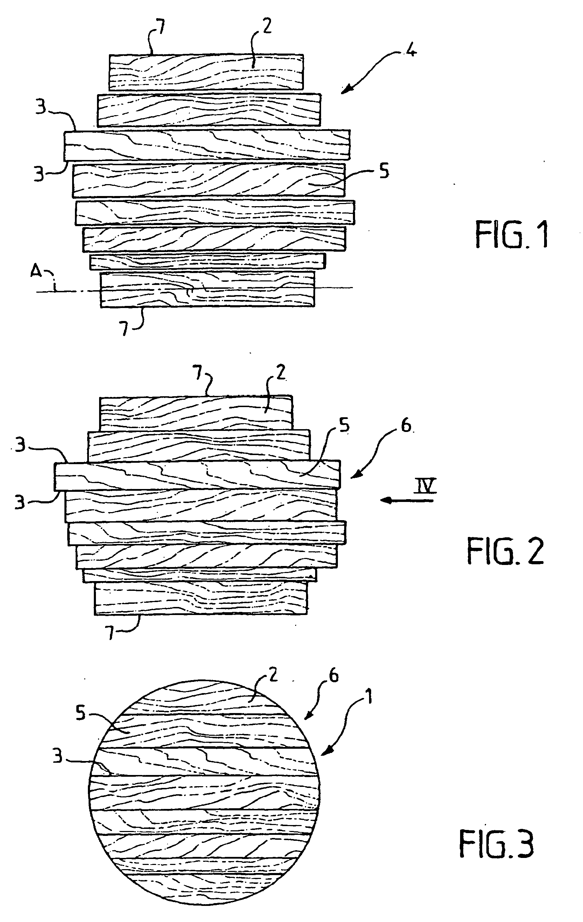

La barrique selon l'invention comporte généralement un corps (non représenté) sensiblement en forme de cylindre bombé, avec une partie centrale de diamètre supérieur à celui de ses extrémités, fermé auxdites extrémités par deux fonds de barrique en bois découpés en forme de disque. Le fond 1 de la barrique selon l'invention, visible à la figure 3, comporte un ensemble de lattes de bois de chêne 2, appelées des pièces de fond, qui sont assemblées parallèlement les unes aux autres par emboîtage à force par leurs faces latérales 3.

Le fond de la barrique selon l'invention et son procédé de fabrication vont maintenant être décrit en référence aux figures 1 à 6. Comme visible à la figure 1, le procédé de fabrication selon l'invention comprend une étape où un lot 4 de pièces de fond 2 est sélectionné, de manière que la longueur et la largeur de la réunion des lattes 2 du lot 4 soient suffisantes pour qu'un fond de barrique puisse y être découpé ultérieurement, après assemblage des lattes 2. Le lot 4 comporte plusieurs lattes 2 de longueurs et de largeurs différentes, disposées parallèlement les unes aux autres, les lattes 2 de plus grande longueur étant, de préférence, disposées au milieu du lot 4. Une latte 2 a, par exemple, une épaisseur de l'ordre de 25 mm, une largeur de l'ordre de 4 à 13 cm et une longueur de l'ordre de 45 à 85 cm. Classiquement, la direction longitudinale A des pièces de fond 2 est globalement parallèle aux fibres du bois. Les faces latérales d'assemblage 3 des lattes 2 du lot 4 portent un profil qui y a été préalablement usiné, et qui sera décrit plus bas, apte à permettre leur assemblage par emboîtage à force et à réaliser un autoserrage. Les faces utiles 5 et 15 des lattes 2 sont régulières et sensiblement planes.

Pour former un fond de barrique 1, les lattes 2 d'un lot 4 sont ensuite emboîtées à force par leurs faces latérales 3. L'étape d'emboîtage 2 à l'aide d'une presse de serrage sera décrite plus bas. Après emboîtage des lattes 2, l'assemblage de lattes 6, visible à la figure 2, présente une face utile 5 sensiblement plane et étanche. L'étape suivante consiste en la découpe dans l'assemblage 6 d'un disque, par exemple de diamètre de l'ordre de 50 cm, pour former le fond de barrique 1, visible à la figure 3.

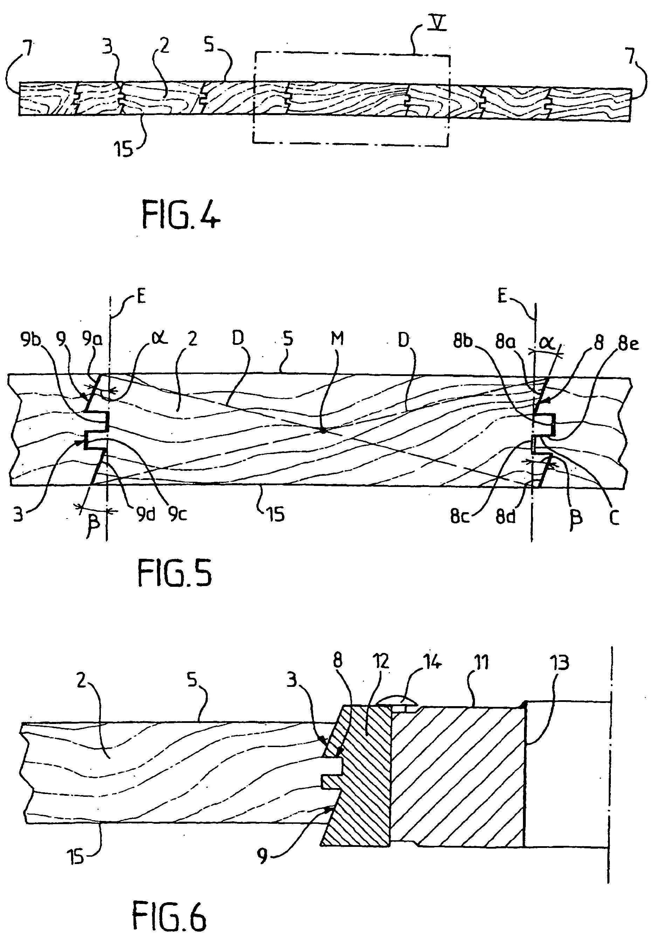

Comme visible à la figure 4, les lattes 2 de l'assemblage 6 sont emboîtées par leurs faces latérales 3. A l'exception des lattes 2 situées aux extrémités de l'assemblage 6, dont les faces latérales extérieures 7 ne sont pas nécessairement usinées, chaque latte 2 de l'assemblage 6 a ses deux faces latérales 3 usinées selon deux profils transverses 8 et 9, complémentaires l'un de l'autre, invariants dans la direction longitudinale A des lattes 2. Comme mieux visible à la figure 5, le profil transverse 8 d'une face latérale d'assemblage 3 d'une latte 2 comporte successivement dans la direction d'épaisseur E de la latte à partir de la face utile 5 : une partie 8a inclinée, d'un angle de sensiblement 30° par exemple, vers l'intérieur de la latte 2 par rapport à ladite direction d'épaisseur E, une partie mâle, en forme de languette à section rectangulaire 8b de sommet parallèle à ladite direction d'épaisseur E, une partie femelle, en forme de rainure à section rectangulaire 8c de fond parallèle à ladite direction d'épaisseur E, et une partie 8d inclinée vers l'extérieur de la latte 2 en formant un angle par rapport à ladite direction d'épaisseur E jusqu'à la face utile opposée 15. La languette à section rectangulaire 8b et la rainure à section rectangulaire 8c sont sensiblement de même largeur, sensiblement égale à 4,4 mm par exemple.

Le profil transverse 9 est complémentaire du profil transverse 8 et comporte successivement, dans ladite direction d'épaisseur E de la latte, à partir de la même face utile 5 : une partie 9a inclinée du même angle , de sensiblement 30° par exemple, vers l'extérieur de la latte 2 par rapport à ladite direction d'épaisseur E, une partie femelle, en forme de rainure à section rectangulaire 9b de fond parallèle à ladite direction d'épaisseur E de la latte 2, une partie mâle, en forme de languette à section rectangulaire 9c de sommet parallèle à ladite direction d'épaisseur E de la latte 2, et une partie 9d inclinée du même angle , de sensiblement 30° par exemple, vers l'intérieur de la latte 2 par rapport à ladite direction d'épaisseur E. Les arêtes transversalement extérieures par rapport à la latte 2 des parties inclinées 8a et 8d du profil 8 (respectivement 9a et 9d du profil 9) sont sensiblement alignées avec le sommet de la languette 8b (respectivement 9c). Les arêtes transversalement intérieures par rapport à la latte 2 des partie inclinées 8a et 8d du profil 8 (respectivement 9a et 9d du profil 9) sont sensiblement alignées avec le fond de la rainure 8c (respectivement 9b).

Dans l'assemblage 6, pour chaque latte 2, le profil 8 d'une face latérale 3 est emboîté dans le profil 9 de la face latérale 3 adjacente de la latte voisine, les parties inclinées 8a et 9a sont en contact, la languette 8b est engagée dans la rainure 9b, la languette 9c est engagée dans la rainure 8c, et les parties inclinées 8d et 9d sont en contact. L'assemblage 6 est maintenu par autoserrage, il ne comporte ni colle, ni goujon, ni autre moyen de fixation. Le contact entre les faces latérales d'assemblage 3 adjacentes est sensiblement étanche. Le gonflement du bois peut encore améliorer ultérieurement l'étanchéité de l'assemblage 6.

Dans le mode de réalisation préféré, représenté à la figure 5, les angles et sont sensiblement égaux, de sorte que les parties du profil 8 inclinées vers l'intérieur et vers l'extérieur respectivement 8a et 8d sont sensiblement parallèles. Le segment 8e joignant le fond de la rainure 8c au sommet de la languette 8b est situé sensiblement à la moitié de l'épaisseur de la latte, et l'axe longitudinal passant par le point milieu C de ce segment 8e est sensiblement axe de symétrie du profil transverse 8. Ainsi, les profils transverses complémentaires 8 et 9 sont l'image l'un de l'autre par une symétrie centrale. Chaque latte 2 peut alors présenter une symétrie centrale par rapport à un axe longitudinal médian passant par le point M situé à l'intersection des diagonales D d'une section transverse de ladite latte, comme visible à la figure 5.

Initialement, un lot 4 de lattes est constitué à partir d'une réserve de pièces de fond 2 aux faces latérales déjà usinées. En variante, l'usinage des faces latérales d'assemblage 3 peut être réalisé après sélection du lot 4. Comme visible à la figure 6, l'usinage des faces latérales d'assemblage 3 d'une latte 2 est réalisé à l'aide d'un outil de coupe tournant, comportant un mandrin 11 à la périphérie duquel sont fixées des plaquettes profilées 12, dont le côté extérieur au mandrin 11 porte le profil complémentaire du profil à usiner. Ainsi, une plaquette 12 pour usiner le profil 8 porte le profil 9, et réciproquement. Le mandrin 11 avec une plaquette profilée 12 a un diamètre total par exemple de l'ordre de 140 mm et une hauteur dans la direction d'épaisseur E précitée de l'ordre de 35 mm par exemple. Il comporte un alésage central 13 par exemple de sensiblement 50 mm de diamètre, pour le monter sur un arbre d'une machine tournante (non représentée). Une vis de réglage 14 permet d'ajuster la position de la plaquette profilée 12 dans la direction d'épaisseur E de la latte 2. De préférence, l'usinage des deux faces latérales 3 ainsi que la régularisation des faces utiles 5 et 15 de la latte 2 est réalisé en un seul passage de la pièce de fond 2 dans une raboteuse quatre faces (non représentée). Un tel dispositif comporte deux mandrins 11 pour usiner simultanément les deux faces latérales 3 opposées d'une latte 2. Du fait de la symétrie des profils 8 et 9, des plaquettes profilées 12 identiques peuvent être montées sur ces deux mandrins 11, les plaquettes 12 montées sur l'un desdits deux mandrins 11 étant agencées dans une position renversée par rapport à celles montées sur l'autre.

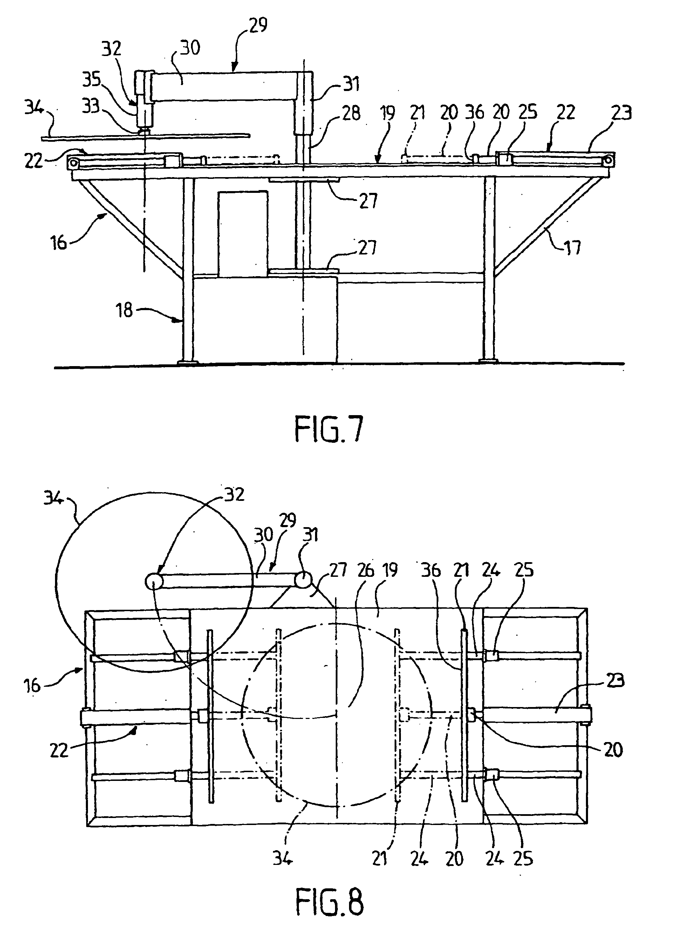

L'invention a également pour objet une presse de serrage pour emboîter les pièces de fond 2 d'un lot 4, visible à la figure 1, et former un assemblage 6, visible à la figure 2. La presse de serrage selon l'invention va maintenant être décrite, en référence aux figures 7 à 9. La presse de serrage selon l'invention comporte une table de support métallique 16 comportant un plateau horizontal 19 relié à quatre pieds verticaux 18. A chacune des deux extrémités longitudinales de la table de support 16, des contreforts 17 viennent relier de manière oblique les extrémités en porte-à-faux dudit plateau horizontal 19 à une barre de liaison horizontale (non représentée) joignant deux pieds 18 à environ la moitié de leur hauteur. La surface plane libre du plateau 19 a pour fonction de supporter un lot 4 de lattes 2 à emboîter. La table de support 16 a, par exemple, une hauteur de l'ordre de 85 cm, une longueur de l'ordre de 225 cm et une largeur de l'ordre de 100 cm. La table de support 16 porte aussi à ses extrémités longitudinales de part et d'autre du plateau 19 deux organes de presse comprenant chacun un ensemble de vérin à piston-cylindre 22 dont le cylindre 23 est rigidement assemblé à la table 16 et dont l'extrémité libre de la tige de piston 20 est fixée perpendiculairement à une barre d'appui 21. La barre 21 est aussi liée perpendiculairement à deux tiges de guidage 24 parallèles à ladite tige de piston 20 et situées de part et d'autre de celle-ci. Les tiges de guidage 24 sont mobiles en translation dans des manchons de guidage 25 liés à la table 16.

Les ensembles de vérin à piston-cylindre 22 sont à double effet, pour déplacer les deux barres d'appui 21 dans les deux sens entre une position de repos proche de l'extrémité longitudinale du plateau 19, cette position étant représentée à la figure 8 en trait continu, et une position de pressage proche d'une partie centrale 26 du plateau 19, représentée à la figure 8 en traits mixtes. Les tiges de piston 20 sont sensiblement rentrées dans les cylindres 23 en position de repos des barres d'appui 21, et sensiblement sorties des cylindres 23 en position de pressage des barres d'appui 21. Chaque barre d'appui 21 a une face d'appui 36 sensiblement perpendiculaire au plateau 19 de longueur de l'ordre par exemple de 80 cm, afin de pouvoir appuyer uniformément sur toute la longueur desdites lattes 2, dont l'axe A est disposé parallèlement à la longueur des barres 21.

Un bord longitudinal de la table 16 comporte aussi deux étriers horizontaux 27 verticalement espacés qui s'étendent vers l'extérieur de la table 16 sensiblement à mi-longueur de celle-ci. Les étriers 27 supportent un axe vertical 28 qui s'étend, par exemple jusqu'à environ 45 cm, au-dessus du niveau du plateau 19, et sur lequel est monté en rotation un organe de maintien 29. L'organe de maintien 29 comprend un bras 30 s'étendant sensiblement horizontalement au-dessus de la table 16, lié perpendiculairement à l'une de ses extrémités à un tube 31 emmanché sur l'axe vertical 28 pour former une liaison pivot avec lui et, à l'autre extrémité, à un ensemble de vérin à piston-cylindre 32 s'étendant vers la table 16 sensiblement parallèlement à l'axe vertical 28, dont l'extrémité libre inférieure de la tige de piston 33 est liée à un disque rigide de maintien 34 parallèle au plateau 19. Le disque 34 est par exemple métallique. L'organe de maintien 29 est mobile en rotation autour de l'axe 28 entre une position de manutention dans laquelle le bras 30 est sensiblement parallèle au bord longitudinal du plateau 19, le disque de maintien 34 étant latéralement décalé par rapport au plateau 19, et une position de maintien, dans laquelle le bras 30 est sensiblement perpendiculaire audit bord longitudinal de la table 16, le disque de maintien 34 étant à l'aplomb de la partie centrale 26 du plateau 19. L'ensemble de vérin à piston-cylindre 32 est à double effet pour déplacer le disque de maintien 34 dans les deux sens entre, d'une part, une position haute dans laquelle, la tige de piston 33 étant rentrée dans le cylindre 35, le disque de maintien 34 est situé au-dessus du plateau 19, par exemple à environ 15 cm, l'organe de maintien 29 pouvant alors être librement déplacé autour de son axe, et d'autre part, une position basse dans laquelle la tige de piston 33 étant sortie du cylindre 35, le disque de maintien 34 est en appui sur le plateau 19 ou sur la surface de lattes 2 posées sur le plateau 19.

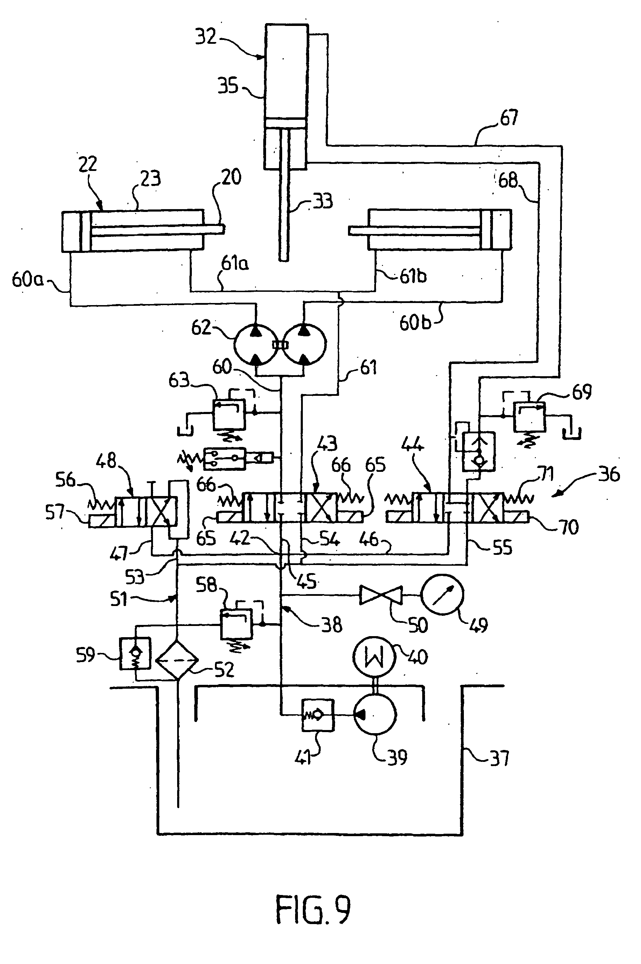

La presse de serrage selon l'invention comporte un système de commande qui va maintenant être décrit en référence à la figure 9. Le système 36 comporte un réservoir 37 contenant un liquide à une pression basse, par exemple sensiblement égale à la pression atmosphérique, pour alimenter le système 36. Le réservoir 37 a par exemple une capacité de 55 litres. Le système de commande 36 comporte également une pompe 39 entraînée par un moteur électrique 40 pour envoyer du liquide à haute pression dans un circuit haute pression 38. Le moteur 40 a par exemple une puissance de l'ordre de 4 kW.

A partir de la sortie de la pompe 39, le circuit haute pression 38 traverse un clapet taré de non-retour 41 et se divise à partir d'un embranchement 42 en une première branche 45 pour alimenter les deux ensembles de vérin à piston-cylindre 22 à travers un distributeur de pressage 43, une deuxième branche 46 pour alimenter l'ensemble de vérin à piston-cylindre 32 à travers un distributeur de maintien 44, et une troisième branche 47 pour mettre à vide le circuit à travers un distributeur de mise à vide 48. En amont de l'embranchement 42, le circuit haute pression 38 est relié à un manomètre 49 à travers un robinet d'isolement 50. Le manomètre 49 permet de contrôler la pression dans le circuit 38 en fonctionnement, qui vaut par exemple de l'ordre de 150 bar.

Le système 36 comporte également un circuit basse pression 51 qui, en partant du réservoir 37, traverse un filtre 52, et se divise en une première branche 54 pouvant être reliée aux deux ensembles de vérin à piston-cylindre 22 à travers le distributeur de pressage 43, une deuxième branche 55 pouvant être reliée à l'ensemble de vérin à piston-cylindre 32 à travers le distributeur de maintien 44, et une troisième branche 53 pour mettre à vide le circuit par le distributeur de mise à vide 48. En amont de l'embranchement 42, le circuit haute pression 38 est aussi relié au circuit basse pression 51 à travers un limiteur de pression 58 en série avec un clapet taré de non retour 59. Si la pression dans le circuit haute pression 38 dépasse une valeur de seuil de sécurité prescrite, le limiteur de pression 58 lui permet de se vider directement dans le réservoir 37.

Le distributeur de mise à vide 48 comporte deux positions : une position de mise à vide, représentée à la figure 9, dans laquelle il met en communication la troisième branche 47 du circuit haute pression 38 avec la troisième branche 53 du circuit basse pression 51, de sorte que le circuit haute pression 38 peut se vider dans le réservoir 37 jusqu'à se trouver à même pression que ce dernier ; et une position de mise sous pression dans laquelle il obstrue la troisième branche 47 du circuit haute pression 38, de sorte qu'une haute pression supérieure à celle du liquide stocké dans le réservoir 37 peut être établie dans le circuit 38. Le distributeur de mise à vide 48 comporte une commande électromécanique 57 pour l'actionner dans sa position de mise sous pression et un ressort de rappel 56 qui exerce un effort pour le ramener dans sa position de mise à vide. Le distributeur 48 peut ainsi remplir une fonction d'interrupteur général du système 36, sa position de mise à vide correspondant à un état d'extinction du système 36 et sa position de mise sous pression correspondant à un état d'allumage du système 36.

En sortie du distributeur 43, deux conduites d'alimentation 60 et 61 des ensembles de vérin à piston-cylindre 22 sont liées respectivement aux deux compartiments des cylindres 23. La conduite d'alimentation 60 se divise en deux branches 60a et 60b liées respectivement au compartiment de chacun des deux cylindres 23 extérieur par rapport au plateau 19. La conduite d'alimentation 61 se divise en deux branches 61a et 61b liées respectivement au compartiment de chacun des deux cylindres 23 intérieur par rapport au plateau 19. Les deux branches 60a et 60b traversent un diviseur de débit 62, qui impose un débit égal dans chacune d'elles, de sorte que les tiges de piston 20 des deux ensembles de vérin à piston-cylindre 22 ne peuvent se déplacer que conjointement et d'une même distance, aussi bien dans le sens du serrage que dans le sens du desserrage. En amont des deux branches 60a et 60b, la conduite d'alimentation 60 est reliée à un limiteur de pression 63, qui permet à la conduite d'alimentation 60 de se vider si la pression y dépasse une valeur de seuil de fonctionnement prescrite. Il permet donc de régler la pression maximale de fonctionnement dans la conduite 60 lors du serrage.

Les mouvements des pistons des ensembles de vérin à piston-cylindre 22 sont commandés par le distributeur 43 qui comporte trois positions : une position d'arrêt dans laquelle les deux conduites d'alimentation 60 et 61 sont obstruées, de sorte que les pistons des ensembles de vérin à piston-cylindre 22 sont immobilisés ; une position de serrage dans laquelle la conduite d'alimentation 60 est reliée à la branche 45 du circuit haute pression et la conduite d'alimentation 61 est reliée à la branche 54 du circuit basse pression, de sorte que les tiges de piston 20 sont déplacées dans le sens du pressage vers le centre du plateau 19 ; et une position de desserrage dans laquelle la conduite d'alimentation 60 est reliée à la branche 54 du circuit basse pression et la conduite d'alimentation 61 est reliée à la branche 45 du circuit haute pression, de sorte que les tiges de piston 20 sont déplacées dans le sens du desserrage vers les extrémités du plateau 19. Le distributeur 43 comporte deux commandes électromécaniques 65 pour le déplacer respectivement vers sa position de serrage et sa position de desserrage, à l'encontre de deux ressorts de rappel 66 dont l'effort s'exerce pour ramener le distributeur 43 vers sa position centrale, qui est sa position d'arrêt.

En sortie du distributeur 44, deux conduites d'alimentation 67 et 68 de l'ensemble de vérin à piston-cylindre 32 sont liées respectivement aux compartiments supérieur et inférieur du cylindre 35. La conduite d'alimentation 67 est reliée à un limiteur de pression 69, qui permet à celle-ci de se vider si la pression y dépasse une valeur de seuil de fonctionnement prescrite. Il permet donc de régler la pression maximale de fonctionnement dans la conduite 67 lors du serrage du disque de maintien 34 en position basse.

Les mouvements de l'ensemble de vérin à piston-cylindre 32 sont commandés par le distributeur 44 qui comporte aussi trois positions : une position de décompression dans laquelle les deux conduites d'alimentation 67 et 68 sont mises en communication avec la branche 55 du circuit basse pression de manière à les décomprimer, de sorte que le piston de l'ensemble de vérin à piston-cylindre 32 peut alors être librement déplacé dans le cylindre 35 ; une position de serrage dans laquelle la conduite d'alimentation 67 est reliée à la branche 46 du circuit haute pression et la conduite d'alimentation 68 est reliée à la branche 55 du circuit basse pression, de sorte que la tige de piston 33 est déplacée dans le sens du pressage, dans lequel le disque de maintien 34 est déplacé vers le plateau 19 ; et une position de desserrage dans laquelle la conduite d'alimentation 67 est reliée à la branche 55 du circuit basse pression et la conduite d'alimentation 68 est reliée à la branche 46 du circuit haute pression, de sorte que la tige de piston 33 est déplacée dans le sens du desserrage, dans lequel le disque de maintien 34 est déplacé vers sa position haute. Le distributeur 44 comporte deux commandes électromécaniques 70 pour le déplacer respectivement vers sa position de serrage et sa position de desserrage, à l'encontre de deux ressorts de rappel 71 dont l'effort s'exerce pour ramener le distributeur 44 vers sa position centrale, qui est sa position de décompression.

Le système hydraulique de commande 36 permet de commander indépendamment les mouvements de l'ensemble de vérin à piston-cylindre 32 par l'intermédiaire du distributeur 44, et les mouvements des deux ensembles de vérin à piston-cylindre 22, par l'intermédiaire du distributeur indépendant 43, afin d'effecteur l'étape d'emboîtage décrite ci-dessous.

L'étape d'emboîtage des lattes 2 se déroule de la manière suivante. Initialement, l'organe de maintien 29 est en position de manutention, le disque de maintien 34 étant en position haute. Les barres d'appui 21 sont en position de repos, proches des extrémités longitudinales du plateau 19. Le distributeur de mise à vide 48 est positionné en position de mise sous pression pour permettre l'utilisation de la presse. Les pièces de fond 2 d'un lot 4, avec leurs deux faces latérales 3 préalablement usinées conformément à la description ci-dessus, sont étendues à la main sur la partie centrale 26 du plateau 19, dans l'ordre dans lequel elles doivent être assemblées, leurs faces latérales d'assemblage 3 parallèles aux faces d'appui 36 des barres 21.

L'organe de maintien 29 est ensuite amené en position de maintien avec le disque de maintien 34 à l'aplomb des lattes 2 à assembler. Le distributeur 44 étant actionné en position de serrage, l'ensemble de vérin à piston-cylindre 32 provoque l'abaissement du disque 34 jusqu'à exercer une pression de maintien sur la face utile libre des lattes 2. Le distributeur 43 étant ensuite actionné aussi en position de serrage, les ensembles de vérin à piston-cylindre 22 provoquent le déplacement des barres d'appui 21 vers leur position de serrage. Les barres d'appui 21 se déplacent jusqu'à entrer en contact avec les faces latérales extérieures 7 du lot de lattes 2 et exercent une pression qui provoque l'emboîtement à force des faces latérales 3 adjacentes des lattes 2. Les barres d'appui 21 ont une hauteur inférieure à l'épaisseur des lattes 2, afin de pouvoir passer sous le disque de maintien pendant le serrage, comme visible en trait mixte à la figure 8. Lorsque les ensembles de vérin à piston-cylindre 22 exercent l'effort nécessaire pour emboîter les lattes 2, le disque de maintien 34 doit exercer aussi une pression de maintien suffisante pour empêcher celles-ci de se décaler verticalement.

Lorsque l'emboîtement est réalisé, le distributeur 43 est amené en position de desserrage et les ensembles de vérin à piston-cylindre 22 sont ainsi actionnés pour ramener les barres d'appui 21 vers leur position de repos. Le distributeur 44 est à son tour amené en position de desserrage et l'ensemble de vérin à piston-cylindre 32 est actionné pour relever le disque 34. L'organe de maintien 29 peut alors être ramené dans sa position de manutention pour permettre le déchargement manuel de l'assemblage 6 obtenu. Le fond de barrique 1 selon l'invention peut alors être découpé dans l'assemblage de lattes 6.

## Revendications

1. Barrique de bois notamment pour la production de vin et d'eaux-de-vie, comportant un corps fermé par deux fonds, chaque fond de barrique (1) comportant un ensemble (6) de lattes (2) sensiblement droites de section transverse sensiblement rectangulaire assemblées parallèlement les unes aux autres par des faces latérales (3) opposées, **caractérisée par le fait que** les deux faces latérales (3) adjacentes de deux desdites lattes (2) assemblées sont en contact sensiblement étanche, lesdites deux faces latérales (3) présentant dans un plan perpendiculaire à la direction longitudinale (A) desdites lattes deux profils longitudinaux (8, 9) sensiblement complémentaires apte à être emboîtés à force l'un dans l'autre dans une direction perpendiculaire à ladite direction longitudinale (A), un premier desdits profils (8) comportant une première partie inclinée (8a) par rapport à la direction d'épaisseur (E) desdites lattes et une première partie femelle (8c) s'étendant vers l'intérieur de l'épaisseur de la latte dans sa direction transversale, et le second desdits profils (9) comportant une seconde partie inclinée (9a) par rapport à la direction d'épaisseur (E) de la latte sensiblement parallèlement à ladite première partie inclinée (8a) et une seconde partie mâle (9c) sensiblement complémentaire de ladite première partie femelle (8c).

2. Barrique selon la revendication 1, **caractérisée par le fait que** chaque partie femelle (8c) forme une rainure rectangulaire dont le fond est sensiblement parallèle à ladite direction d'épaisseur.

3. Barrique selon l'une des revendications 1 ou 2, **caractérisée par le fait que** ledit premier profil (8) comporte une première partie mâle (8b) s'étendant vers l'extérieur de la latte dans sa direction transversale, et le second profil (9) comporte une seconde partie femelle (9b) sensiblement complémentaire.

4. Barrique selon la revendication 3, **caractérisée par le fait que** ledit premier profil (8) présente successivement à partir d'une de ses extrémités ladite première partie inclinée (8a), ladite première partie mâle (8b) et ladite première partie femelle (8c).

5. Barrique selon la revendication 4, **caractérisée par le fait que** ledit premier profil (8) comporte une troisième partie inclinée (8d) s'étendant à partir de ladite première partie femelle (8c), ladite troisième partie inclinée (8d) étant inclinée par rapport à la direction d'épaisseur (E) de la latte et se terminant à l'autre extrémité dudit premier profil (8), et le second profil (9) comporte une quatrième partie inclinée (9d) sensiblement complémentaire de ladite troisième partie inclinée (8d).

6. Barrique selon la revendication 5, **caractérisée par le fait que** lesdites première et troisième parties inclinées (8a,8d) dudit premier profil (8) sont sensiblement parallèles entre elles.

7. Barrique selon la revendication 6, **caractérisée par le fait que** ledit premier profil (8) possède un axe longitudinal de symétrie (C) situé à mi-longueur du tronçon de profil (8e) reliant le fond de ladite première partie femelle (8c) au sommet de ladite première partie mâle (8b).

8. Barrique selon l'une des revendications 1 à 7, **caractérisée par le fait que** chaque partie inclinée (8a, 9a, 8d, 9d) fait un angle de l'ordre de 30 degrés par rapport à ladite direction d'épaisseur (E).

9. Procédé de fabrication d'un fond de barrique, **caractérisé par le fait qu'**il comporte :
(a) une étape d'usinage de chacune d'une pluralité de lattes (2), selon deux faces latérales (3) opposées parallèles à la direction longitudinale (A) de ladite latte, pour usiner suivant respectivement deux profils sensiblement complémentaires (8, 9) lesdites deux faces opposées (3) de chacune desdites lattes (2), de manière invariante sur la longueur de ladite latte (2), un premier desdits profils (8) comportant une première partie inclinée (8a) par rapport à la direction d'épaisseur (E) de ladite latte (2) et une première partie femelle (8c) s'étendant vers l'intérieur de l'épaisseur de la latte dans sa direction transversale et le second desdits profils (9) comportant une seconde partie inclinée (9a) par rapport à la direction d'épaisseur (E) de la latte (2) sensiblement parallèlement à ladite première partie inclinée (8a) et une seconde partie mâle (9c) sensiblement complémentaire de ladite première partie femelle (8c) ;
(b) une étape de sélection d'un lot de lattes (4) parmi ladite pluralité, ledit lot (4) étant sélectionné de façon que la surface utile (5,15) de la réunion des lattes (2) dudit lot (4), lorsqu'elles seront juxtaposées parallèlement les unes aux autres avec lesdites faces latérales (3) opposées emboîtées, est apte à contenir un disque de diamètre supérieur ou égal à celui dudit fond de barrique (1) ;
(c) une étape d'emboîtage à force dudit lot (4) de lattes (2) par lesdites faces (3) opposées, pour provoquer l'emboîtement des paires de faces latérales (3) adjacentes des lattes (2) dudit lot (4), chaque paire comportant deux faces latérales (3) usinées suivant respectivement lesdits deux profils (8,9) sensiblement complémentaires, le contact entre lesdites faces latérales (3) étant, à l'issue de ladite étape d'emboîtement, sensiblement étanche et rigidement maintenu par l'autoserrage desdits deux profils (8,9) sensiblement complémentaires ;
(d) une étape de découpe dudit fond de barrique (1) dans ledit lot de lattes emboîtées (6).

10. Procédé selon la revendication 9, **caractérisé par le fait que** ladite étape d'usinage permet l'usinage simultané desdites deux faces latérales (3) opposées de ladite latte (2) à l'aide d'au moins deux outils de coupe (12) distincts ou identiques.

11. Procédé selon l'une des revendications 9 ou 10, **caractérisé par le fait que** ladite étape d'emboîtage comprend successivement la disposition dudit lot (4) de lattes à assembler par leurs surfaces utiles (15) sur une surface de support (19), le positionnement d'un organe de maintien (28-35) pour exercer une pression sur la face utile libre de toutes les lattes dudit lot (4) en direction de ladite surface de support (19), et l'activation d'au moins un organe de pressage (20, 21) mobile sensiblement perpendiculairement auxdites faces latérales (3), entre ladite surface de support (19) et ledit organe de maintien (28-35).

12. Dispositif pour la mise en oeuvre du procédé selon la revendication 11, comprenant une presse pour effectuer ladite étape d'emboîtage, ladite presse comportant ladite surface de support (19) pour supporter les pièces à presser, ledit organe de maintien (28-35) qui comprend une surface de maintien (34) sensiblement plane à une de ses extrémités et est apte à exercer une pression de ladite surface de maintien (34) vers ladite surface de support (19), et ledit au moins un organe de pressage (20-23) situé près d'une extrémité de ladite surface de support (19), chaque organe de pressage comportant une face d'appui (36) et étant apte à exercer une force pour déplacer ladite face d'appui (36) dans une direction parallèle à ladite surface de support (19), **caractérisé par le fait que** ledit organe de maintien (28-35) est déplaçable entre une position de manutention dans laquelle ladite surface de maintien (34) est décalée latéralement par rapport à ladite surface de support (19) et une position de maintien dans laquelle ladite surface de maintien (34) est à l'aplomb d'au moins une partie centrale (26) de ladite surface de support (19).

13. Dispositif selon la revendication 12, **caractérisé par le fait que** ladite presse comporte deux organes de pressage (20-23) dont les faces d'appui (36) sont agencées face à face de part et d'autre de ladite partie centrale (26) de la surface de support (19).

14. Dispositif selon l'une des revendications 11 ou 12, **caractérisé par le fait que** ledit organe de maintien (28-35) comporte un bras (30) mobile en rotation autour d'un axe (28) situé à une extrémité de ladite surface de support (19), une extrémité libre dudit bras (30) portant ladite surface de maintien (34).

## Patentansprüche

1. Holzfass, insbesondere für die Herstellung von Wein und Bränden (Eaux-de-vie), mit einem durch zwei Böden verschlossenen Körper, wobei jeder Holzboden (1) eine Anordnung (6) von im Wesentlichen geraden Latten (2) mit im Wesentlichen rechteckigem Querschnitt aufweist, die parallel zueinander entlang ihrer gegenüberliegenden Seitenflächen (3) angeordnet sind, **dadurch gekennzeichnet, dass** die beiden benachbarten Seitenflächen (3) von jeweils zwei der angeordneten Latten (2) in einem im Wesentlichen dichten Kontakt zueinander stehen, wobei die beiden Seitenflächen (3) in einer zur Längsrichtung (A) der Latten senkrechten Ebene zwei im Wesentlichen komplementäre Längsprofile (8, 9) aufweisen, die in einer zur Längsrichtung (A) senkrechten Richtung ineinander gepresst werden können, wobei ein erstes der Profile (8) einen ersten zur Richtung der Dicke (E) der Latten geneigten Abschnitt (8a) und einen weiblichen Abschnitt (8c) aufweiset, der sich in der Querrichtung ins innere der Dicke der Latten erstreckt, während das zweite der Profile (9) einen zweiten, zu der Richtung der Dicke (E) der Latte geneigten Abschnitt (9a), der im Wesentlichen parallel zu dem ersten geneigten Abschnitt (8a) verläuft, und einen zweiten männlichen Abschnitt (9c) aufweist, der im Wesentlichen komplementär zu dem ersten weiblichen Abschnitt (8c) ist.

2. Fass gemäß Anspruch 1, **dadurch gekennzeichnet, dass** jeder weibliche Abschnitt (8c) eine rechteckige Nut bildet, deren Boden im Wesentlichen parallel zu der Richtung der Dicke ist.

3. Fass gemäß einem der Ansprüche 1 oder 2, **dadurch gekennzeichnet, dass** das erste Profil (8) einen ersten männlichen Abschnitt (8b) aufweist, der in der Querrichtung nach außen aus der Latte hervorragt, wobei das zweite Profil (9) einen im Wesentlichen komplementären zweiten weiblichen Abschnitt (9b) aufweist.

4. Fass gemäß Anspruch 3, **dadurch gekennzeichnet, dass** das erste Profil (8) ausgehend von einem seiner Enden nacheinander den ersten geneigten Abschnitt (8a), den ersten männlichen Abschnitt (8b) und den ersten weiblichen Abschnitt (8c) aufweist.

5. Fass gemäß Anspruch 4, **dadurch gekennzeichnet, dass** das erste Profil (8) einen dritten geneigten Abschnitt (8d) aufweist, der von dem ersten weiblichen Abschnitt (8c) ausgeht, wobei der dritte geneigte Abschnitt (8d) bezüglich der Richtung der Dicke (E) der Latte geneigt ist und am anderen Ende des ersten Profils (8) endet, während das zweite Profile (9) einen zu dem dritten geneigten Abschnitt (8d) im Wesentlichen komplementären vierten geneigten Abschnitt (9d) aufweist.

6. Fass gemäß Anspruch 5, **dadurch gekennzeichnet, dass** die ersten und dritten geneigten Abschnitte (8a, 8d) des ersten Profils (8) im Wesentlichen parallel zueinander sind.

7. Fass gemäß Anspruch 6, **dadurch gekennzeichnet, dass** das erste Profil (8) eine Symmetrielängsachse (C) aufweist, die sich auf halber Strecke des Teilstücks des Profils (8e) befindet, das den Boden des ersten weiblichen Abschnitts (8c) mit der Spitze des ersten männlichen Abschnitts (8b) verbindet.

8. Fass gemäß einem der Ansprüche 1 bis 7, **dadurch gekennzeichnet, dass** jeder geneigte Abschnitt (8a, 9a, 8d, 9d) einen Winkel in der Größenordnung von 30 Grad zur Richtung der Dicke (E) bildet.

9. Verfahren zur Herstellung eines Holzbodens, **gekennzeichnet durch** die folgenden Schritte:
(a) einen Schritt der Bearbeitung jeder von mehreren Latten (2) entlang ihrer beiden gegenüberliegenden, parallel zur Längsrichtung der Latte (A) verlaufenden Seitenflächen (3), um bei jeder der Latten (2) zwei im Wesentlichen komplementäre Profile (9), die sich entlang der Länge der Latte (2) nicht ändern, in die eine beziehungsweise die andere der beiden gegenüberliegenden Flächen (3) einzuarbeiten, wobei eines der beiden Profile (8) einen ersten gegenüber der Dicke (E) der Latte (2) geneigten Abschnitt (8a) und einen ersten weiblichen Abschnitt (8c) aufweist, der sich in ihrer Querrichtung ins Innere der Latte erstreckt, während das zweite der Profile (9) einen bezüglich der Richtung der Dicke (E) der Latte (2) geneigten zweiten Abschnitt (9a) aufweist, der im Wesentlichen parallel zu dem ersten geneigten Abschnitt (8a) verläuft und ein zweiter männlicher Abschnitt (9c) vorgesehen ist, der im Wesentlichen komplementär zu dem ersten weiblichen Abschnitt (8c) ist;
(b) einen Schritt der Auswahl eines Loses von Latten (4) aus diesen zahlreichen Latten, wobei das Los (4) so gewählt ist, dass die Nutzfläche (5, 15) der zusammengefügten Latten (2) des Loses (4), wenn diese parallel zueinander mit ihren gegenüberliegenden Seitenflächen (3) ineinandergesetzt angeordnet sind, eine Scheibe mit einem Durchmesser bildet, der größer als oder gleich groß wie derjenige des Bodens des Fasses (1) ist;
(c) einen Schritt des Zusammenpressens des Loses (4) der Latten (2) entlang der gegenüberliegenden Flächen (3) um das Ineinanderfügen der benachbarten Paare der Seitenflächen (3) der Latten (2) des Loses (4) zu bewirken, wobei jedes Paar zwei Seitenflächen (3) aufweist, die zu den jeweils im Wesentlichen komplementären beiden Profilen (8, 9) bearbeitet wurden, wobei der aus dem Zusammenpressschritt hervorgehende Kontakt zwischen den Seitenflächen (3) im Wesentlichen dicht ist und **durch** eine Selbstklemmung der beiden im Wesentlichen komplementären Profile (8, 9) starr gehalten wird;
(d) einen Schritt des Herausschneidens des Holzbodens (1) aus dem Los der zusammengesetzten Latten (6).

10. Verfahren gemäß Anspruch 9, **dadurch gekennzeichnet, dass** der Bearbeitungsschritt die gleichzeitige Bearbeitung der beiden gegenüberliegenden Seitenflächen (3) der Latte (2) mittels wenigstens zweier unterschiedlicher oder identischer Schneidwerkzeuge (2) ermöglicht.

11. Verfahren gemäß einem der Ansprüche 9 oder 10, **dadurch gekennzeichnet, dass** der Zusammenpressschritt nacheinander die folgenden Schritte umfasst: die Anordnung des Loses (4) der zusammenzusetzenden Latten mit ihren Nutzflächen (15) auf einer Unterlage (19), die Positionierung eines Haltemittels (28-35) zur Ausübung eines Drucks auf die freie Nutzfläche aller Latten des Loses (4) in Richtung der Unterlage (19) und die Aktivierung wenigstens eines Druckmittels (20, 21), das im Wesentlichen senkrecht zu den Seitenflächen (3) zwischen der Unterlage (19) und dem Haltemittel (28-35) beweglich ist.

12. Vorrichtung zur Durchführung des Verfahrens gemäß Anspruch 11, umfassend eine Presse zur Durchführung des Zusammenpressschrittes, wobei die Presse die Unterlage (19) zum Halten der zusammenzupressenden Bauteile, das Haltemittel (28-35), das eine Haltefläche (34) mit einer im Wesentlichen ebenen Fläche an einem seiner Enden und das in der Lage ist, einen Druck auf die Haltefläche (34) in Richtung Unterlage (19) auszuüben, und wenigstens ein Pressmittel (20-23) umfasst, das in der Nähe von einem Ende der Unterlage (19) angeordnet ist, wobei jedes Pressmittel eine Anschlagfläche (36) aufweist, und geeignet ist, eine Kraft auszuüben, um die Anschlagfläche (36) in einer zu der Unterlage (19) parallelen Richtung zu verschieben, **dadurch gekennzeichnet, dass** das Haltemittel (28-35) zwischen einer Handhabungsposition, in der die Haltefläche (34) bezüglich der Unterlage (19) seitlich versetzt ist, und einer Halteposition, in der die Haltefläche (34) direkt über wenigstens einem zentralen Bereich (26) der Unterlage (19) liegt, verschiebbar ist.

13. Vorrichtung gemäß Anspruch 12, **dadurch gekennzeichnet, dass** die Presse zwei Pressmittel (20-23) aufweist, deren Anschlagflächen (36) auf beiden Seiten des zentralen Bereichs (26) der Unterlage (19) einander zugewandt angeordnet sind.

14. Vorrichtung gemäß einem der Ansprüche 11 oder 12, **dadurch gekennzeichnet, dass** das Haltemittel (28-35) einen um eine Achse (28), die an einem Ende der Unterlage (19) angeordnet ist, drehbeweglichen Arm (30) aufweist, wobei ein freies Ende des Arms (30) die Haltefläche (34) trägt.

## Claims

1. Wooden cask, particularly for the production of wine and spirits, comprising a body closed by two heads, each cask head (1) comprising a set (6) of substantially straight staves (2) of substantially rectangular cross section assembled parallel to one another by way of opposed lateral faces (3), **characterized in that** the two adjacent lateral faces (3) of two of the said assembled staves (2) are in substantially sealed contact, the said two lateral faces (3) having, in a plane perpendicular to the longitudinal direction (A) of the said staves, two substantially complementary longitudinal profiles (8, 9) capable of being force-fitted into one another in a direction perpendicular to the said longitudinal direction (A), a first of the said profiles (8) comprising a first part (8a) which is inclined with respect to the direction of thickness (E) of the said staves and a first female part (8c) extending towards the inside of the thickness of the stave in its transverse direction, and the second of the said profiles (9) comprising a second part (9a) which is inclined with respect to the direction of thickness (E) of the stave and is substantially parallel to the said first inclined part (8a), and a second male part (9c) substantially complementary to the said first female part (8c).

2. Cask according to Claim 1, **characterized in that** each female part (8c) forms a rectangular groove whose base is substantially parallel to the said direction of thickness.

3. Cask according to either of Claims 1 and 2, **characterized in that** the said first profile (8) comprises a first male part (8b) extending towards the outside of the stave in its transverse direction, and the second profile (9) comprises a substantially complementary second female part (9b).

4. Cask according to Claim 3, **characterized in that** the said first profile (8) has in succession, starting from one of its ends, the said first inclined part (8a), the said first male part (8b) and the said first female part (8c).

5. Cask according to Claim 4, **characterized in that** the said first profile (8) comprises a third inclined part (8d) extending from the said first female part (8c), the said third inclined part (8d) being inclined with respect to the direction of thickness (E) of the stave and terminating at the other end of the said first profile (8), and the second profile (9) comprises a fourth inclined part (9d) substantially complementary to the said third inclined part (8d).

6. Cask according to Claim 5, **characterized in that** the said first and third inclined parts (8a, 8d) of the said first profile (8) are substantially parallel to one another.

7. Cask according to Claim 6, **characterized in that** the said first profile (8) has a longitudinal axis of symmetry (C) situated midway along the profile portion (8e) connecting the bottom of the said first female part (8c) to the top of the said first male part (8b).

8. Cask according to one of Claims 1 to 7, **characterized in that** each inclined part (8a, 9a, 8d, 9d) forms an angle of around 30 degrees with respect to the said direction of thickness (E).

9. Method of manufacturing a cask head, **characterized in that** it comprises:
(a) a step of machining each of a plurality of staves (2) along two opposed lateral faces (3) which are parallel to the longitudinal direction (A) of the said stave so that two substantially complementary profiles (8, 9) are respectively machined into the said two opposed faces (3) of each of the said staves (2) in an unvarying manner over the length of the said stave (2), a first of the said profiles (8) comprising a first part (8a) which is inclined with respect to the direction of thickness (E) of the said stave (2) and a first female part (8c) extending towards the inside of the thickness of the stave in its transverse direction, and the second of the said profiles (9) comprising a second part (9a) which is inclined with respect to the direction of thickness (E) of the stave (2) and is substantially parallel to the first inclined part (8a), and a second male part (9c) substantially complementary to the said first female part (8c);
(b) a step of selecting a batch of staves (4) from the said plurality, the said batch (4) being selected so that the useful surface (5, 15) of the combined staves (2) of the said batch (4), when they have been juxtaposed parallel to one another with the said opposed lateral faces (3) fitted together, is able to contain a disc having a diameter greater than or equal to that of the said cask head (1);
(c) a step of force-fitting the said batch (4) of staves (2) by way of the said opposed faces (3) in order to fit together pairs of adjacent lateral faces (3) of the staves (2) of the said batch (4), each pair comprising two lateral faces (3) machined respectively with the said two substantially complementary profiles (8, 9), the contact between the said lateral faces (3) being, on completion of the said fitting step, substantially sealed and rigidly maintained by the self-clamping of the said two substantially complementary profiles (8, 9);
(d) a step of cutting out the said cask head (1) from the said batch of fitted-together staves (6).

10. Method according to Claim 9, **characterized in that** the said machining step makes it possible to simultaneously machine the said two opposed lateral faces (3) of the said stave (2) using at least two separate or identical cutting tools (12).

11. Method according to either of Claims 9 and 10, **characterized in that** the said fitting step comprises, in succession, arranging the said batch (4) of staves to be assembled by their useful surfaces (15) on a support surface (19), positioning a retaining means (28-35) so that a pressure can be exerted on the free useful face of all the staves of the said batch (4) in the direction of the said support surface (19), and activating at least one pressing means (20, 21) which can move substantially perpendicularly to the said lateral faces (3), between the said support surface (19) and the said retaining means (28-35).

12. Device for implementing the method according to Claim 11, comprising a press for carrying out the said fitting step, the said press comprising the said support surface (19) for supporting the pieces to be pressed, the said retaining means (28-35), which comprises a substantially planar retaining surface (34) at one of its ends and is capable of exerting a pressure on the said retaining surface (34) towards the said support surface (19), and the said at least one pressing means (20-23) situated close to one end of the said support surface (19), each pressing means comprising a bearing face (36) and being capable of exerting a force to move the said bearing face (36) in a direction parallel to the said support surface (19), **characterized in that** the said retaining means (28-35) is able to move between a standby position in which the said retaining surface (34) is laterally offset with respect to the said support surface (19) and a retaining position in which the said retaining surface (34) lies directly above at least a central part (26) of the said support surface (19).

13. Device according to Claim 12, **characterized in that** the said press comprises two pressing means (20-23) whose bearing faces (36) are arranged face to face on either side of the central part (26) of the support surface (19).

14. Device according to either of Claims 11 and 12, **characterized in that** the said retaining means (28-35) comprises an arm (30) which can rotate about a spindle (28) situated at one end of the said support surface (19), a free end of the said arm (30) bearing the said retaining surface (34).
